# EUROPÄISCHE PATENTANMELDUNG

(11) **EP 4 700 262 A1**
(43) Veröffentlichungstag der Anmeldung: **25.02.2026**
(21) Anmeldenummer: 25186736.2
(22) Anmeldetag: 01.07.2025
(51) Int. Cl.: F16L 5/04, H02G 3/04

(54) **BRANDSCHOTT**

(30) Priorität: 20.08.2024 DE 102024123770
(71) Anmelder: Kolektor Insulation GmbH, 70736 Fellbach (DE)
(72) Erfinder: Korfant, Michael, 70374 Stuttgart (DE)
(74) Vertreter: Manitz Finsterwald Patent- und Rechtsanwaltspartnerschaft mbB

(57) **Zusammenfassung**

Ein Brandschott für Rohre und Leitungen umfasst ein Gehäuse aus Metall, in dem Brandschutzpackungen befestigt sind, wobei an der Stirnseite eine Schutzschiene vorhanden ist.

## Beschreibung

Die vorliegende Erfindung betrifft ein Brandschott für Rohre und Leitungen, umfassend ein Gehäuse aus Metall mit zumindest zwei offenen Seiten und zumindest drei Seitenwänden, wobei an den Innenseiten der Seitenwände quaderförmige Brandschutzpackungen befestigt sind.

Derartige Brandschotts sind aus dem Stand der Technik bekannt und werden in Wänden oder an Decken oder Böden montiert, wobei durch zwei gegenüberliegende offene Seiten Kabel, Leitungen und Rohre durchgeführt werden können. Bei einer Montage in einer Wand oder einer Decke weisen derartige Brandschotts üblicherweise vier Seitenwände und zwei gegenüberliegende offene Seiten auf. Bei einer Montage unter einer Decke, an der Wand oder auf dem Boden kann das Brandschott lediglich drei Seitenwände aufweisen, da die vierte Seitenwand dann durch die Decke, Wand oder den Boden gebildet wird. In allen Fällen sorgen die an der Innenseite der Seitenwände vorhandenen Brandschutzpackungen durch deren im Brandfall aufquellendes Material für einen Brandschutz. Ein zusätzlicher Rauchdichtverschluss kann durch Ausschäumen mit entsprechenden Materialien erzielt werden.

Das intumeszierende Material der Brandschutzpackungen muss aufgrund seiner hygroskopischen Eigenschaften von der umgebenden Luft isoliert werden und ist deshalb in den Brandschutzpackungen luftdicht gekapselt. Sollte das Packungsmaterial allerdings beschädigt werden, würde die Brandschutzpackung in ihrer Funktion beeinträchtigt werden. Zu einer Beschädigung kann es insbesondere kommen, wenn Kabelstränge beim Verlegen maschinell durch das Brandschott gezogen werden.

Es ist deshalb die Aufgabe der vorliegenden Erfindung, ein Brandschott nach dem Oberbegriff des Anspruchs 1 zu schaffen, bei dem die Gefahr einer Beschädigung einer Brandschutzpackung reduziert ist.

Die Lösung dieser Aufgabe erfolgt durch die Merkmale des Anspruchs 1 und insbesondere dadurch, dass an mindestens einer Stirnseite von zumindest einer Brandschutzpackung eine Schutzschiene vorhanden ist. Mit einer solchen Schutzschiene wird verhindert, dass die Brandschutzpackung beim Einziehen eines Kabelstrangs im Bereich ihrer äußeren Stirnseite beschädigt wird, da der Kabelstrang häufig über eine solche Stirnseite aus dem Brandschott herausgezogen und dabei schräg abgewinkelt wird. Da die Schutzschiene lediglich an der Stirnseite der Brandschutzpackung vorgesehen ist, ist deren Funktion durch die Schutzschiene nicht beeinträchtigt. Beim Einziehen eines Kabelstrangs stützt sich dieser gegebenenfalls an der Schutzschiene, jedoch nicht an der vorderen Kante bzw. Stirnseite der Brandschutzpackung ab, so dass diese beschädigungsfrei bleibt.

Vorteilhafte Ausführungsformen der Erfindung sind in der Beschreibung, der Zeichnung sowie den Unteransprüchen beschrieben.

Nach einer ersten vorteilhaften Ausführungsform kann sich die Schutzschiene über die gesamte Stirnseite erstrecken, so dass die geschützte Brandschutzpackung entlang ihrer gesamten Länge beschädigungsfrei bleibt.

Auch können die Schutzschienen an jeder Brandschutzpackung oder auch beidseitig an den offenen Seiten des Gehäuse positioniert werden. Weiterhin ist es möglich, die Schutzschiene innerhalb des Gehäuses oder außerhalb des Gehäuses zu positionieren.

Nach einer weiteren vorteilhaften Ausführungsform kann die Schutzschiene an zumindest einer Brandschutzpackung befestigt, insbesondere verschraubt sein. Zwar muss die Brandschutzpackung, wie vorstehend bereits erwähnt, ihre luftdichte Umhüllung beibehalten. Allerdings ist es möglich, ein Befestigungsmittel für die Schutzschiene an zwei parallel gegenüberliegenden Stirnseiten der Brandschutzpackung anzulegen, so dass sich das Befestigungsmittel zwischen zwei offenen Seiten des Brandschotts erstreckt. In diesem Fall wird die Brandschutzpackung von dem Befestigungsmittel zwar geklemmt, jedoch nicht beschädigt, wobei gleichzeitig die Schutzschiene an einer Stirnseite der Brandschutzpackung sicher gehalten ist. Auch kann die Befestigung der Schutzschiene am Gehäuse erfolgen. Weiterhin können Befestigungsmittel auch an einer offenen Seite des Gehäuses angebracht sein.

Nach einer weiteren vorteilhaften Ausführungsform kann die Schutzschiene eine Profilschiene sein, was deren Stabilität erhöht. Hierbei kann es vorteilhaft sein, wenn die Profilschiene ein C-Profil besitzt, dessen Schlitz sich zu einer offenen Seite des Brandschotts hin (nach außen) öffnet. Dies ermöglicht einerseits, dass in das Innere des C-Profils ein Montagemittel eingeführt wird, beispielsweise eine Mutter oder ein Kulissenstein, um die Profilschiene zu befestigen. Andererseits kann die Profilschiene bei dieser Ausführungsform dazu verwendet werden, eine Halterung für weitere Brandschutzelemente an dem Brandschott zu befestigen. Bei bestimmten Anwendungen kann es nämlich erforderlich sein, das Brandschott mit weiteren Brandschutzelementen, wie Brandschutzklappen oder zusätzlichen Brandschutzmanschetten auszustatten. Diese können dann auf einfache Weise an der Schutzschiene montiert werden. Eine solche Halterung kann beispielsweise Haltewinkel oder Haltestege umfassen, die an die Schutzschiene und an dem weiteren Brandschutzelement befestigt sind. Auch ist es möglich, eine Schutzschiene ohne Profil zu verwenden, und in diese Schrauben einzudrehen.

Nach einer weiteren vorteilhaften Ausführungsform sind an der Stirnseite von zwei parallel beabstandeten Brandschutzpackungen Schutzschienen vorgesehen, wobei diese insbesondere an einer offenen Seite des Brandschotts angeordnet sind. Da derartige Brandschotts häufig einen rechteckigen Querschnitt haben und Leitungen bzw. Kabelstränge in der Praxis gegebenenfalls über die Längskante, jedoch nicht über die kurze Kante der offenen Seiten abgebogen werden, kann es ausreichend sein, wenn das Brandschott auf einer offenen Seite lediglich zwei parallel gegenüberliegende Schutzschienen aufweist, die sich entlang der Längskanten erstrecken. Selbstverständlich ist es jedoch auch möglich, an allen vier Stirnseiten der Brandschutzpackungen und auch auf beiden offenen Seiten des Brandschotts Schutzschienen vorzusehen.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht eines Brandschotts; und
- Fig. 2: eine perspektivische Detailansicht der Rückseite des Brandschotts von Fig. 1.

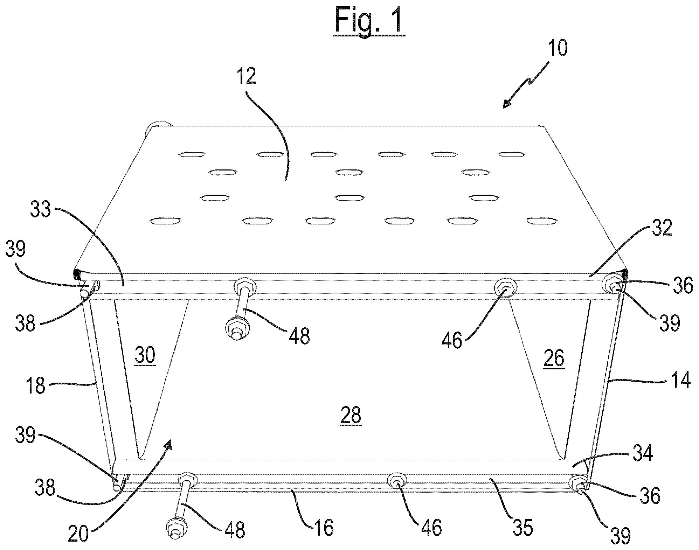

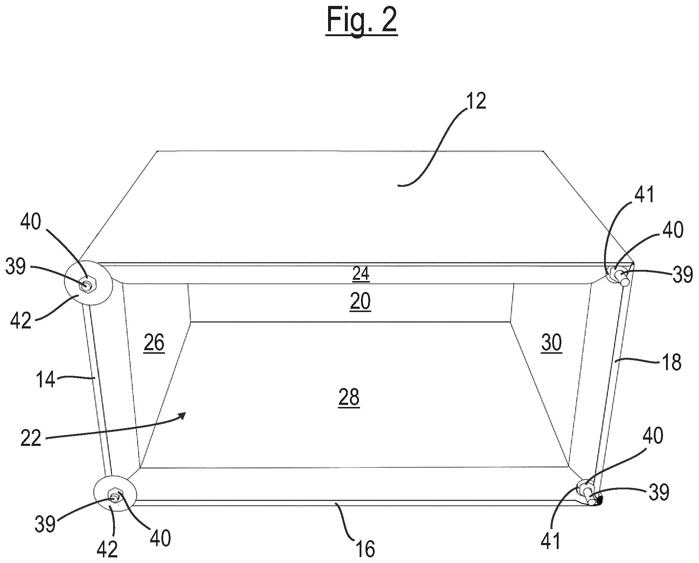

Das in Fig. 1 dargestellte Brandschott für Rohre und Leitungen umfasst ein Gehäuse 10 aus Metall, das bei dem dargestellten Ausführungsbeispiel quaderförmig ausgebildet ist und vier Seitenwände 12, 14, 16, 18 sowie eine offene vordere Seite 20 und eine offene rückwärtige Seite 22 (Fig. 2) aufweist. Das Gehäuse 10 kann beispielsweise aus Stahlblech bestehen und muss wie eingangs bereits erwähnt nicht vier Seitenwände umfassen.

Bei dem dargestellten Ausführungsbeispiel ist an der Innenseite jeder Seitenwand 12 bis 18 jeweils ein quaderförmiges Brandschutzpaket 24 (Fig. 2), 26, 28 und 30 befestigt. Jedes Brandschutzpaket ist mit im Brandfall intumeszierendem Material gefüllt und luftdicht gekapselt. Jede Brandschutzpackung bedeckt im Wesentlichen die vollständige Innenseite der zugehörigen Seitenwand. Wie dabei Fig. 2, verdeutlicht, sind die Brandschutzpakete in den Ecken des Brandschotts unter 45° angefast.

Fig. 1 zeigt weiterhin, dass an der jeweiligen vorderen Stirnseite der Brandschutzpackungen 24 und 28 eine sich über die gesamte Stirnseite erstreckende Schutzschiene 32 und 34 angeordnet ist. Hierbei deckt die Schutzschiene 32 die vordere Stirnseite der Brandschutzpackung 24 vollständig ab, während die Schutzschiene 34 die gesamte vordere Stirnseite der Brandschutzpackung 28 abdeckt. Beide Schutzschienen erstrecken sich zwischen beiden Seitenwänden 14 und 18, d.h. bis in den Bereich, in dem eine Brandschutzpackungen an ihre benachbarte Brandschutzpackung angrenzt.

Bei dem dargestellten Ausführungsbeispiel sind die Schutzschienen 32 und 34 als Profilschienen mit einem C-Profil ausgebildet, dessen Schlitz 33 und 35 sich zur offenen Seite des Brandschotts hin öffnet. An den äußeren Enden der Profilschienen sind mit einem Innengewinde versehene Kulissensteine 36 oder Muttern 38 eingeschoben, in die jeweils eine sich zwischen beiden offenen Seiten 20 und 22 erstreckende Gewindestange 39 eingeschraubt ist. An der offenen Rückseite 22 (vgl. Fig. 2) ist jede Gewindestange 39 mit einer Mutter 40 und einer darunterliegenden Beilagscheibe 41 und 42 verschraubt, wobei sich Beilagscheiben 41 an den rückwärtigen Stirnseiten der beiden aneinander angrenzenden Brandschutzpackungen abstützen. Hierdurch lassen sich die beiden Schutzschienen 32 und 34 ausreichend fest an dem Brandschott montieren. Die Beilagscheiben 42 besitzen einen etwas größeren Durchmesser und stützen sich an dem Gehäuse 10 ab.

Fig. 1 zeigt ferner, dass an den Schutzschienen 32 und 34 Halterungen 46, 48 für weitere Brandschutzelemente befestigt sind. Bei den weiteren Brandschutzelementen kann es sich wie dargestellt um Haltemanschetten aus Metall für weitere Brandschutzmanschetten oder für Brandschutzklappen handeln. Die Befestigung erfolgt hierbei wiederum über die Profilschienen 32 und 34, in die weitere Kulissensteine eingesetzt sind, in die Schrauben 46 oder Gewindestangen 48 (jeweils mit Beilagscheiben und gegebenenfalls erforderlichen Befestigungsmuttern) eingeschraubt sind. Hierdurch lassen sich Haltewinkel oder andere Halteelemente an den Schutzschienen 32 und 34 befestigen, so dass die zusätzlichen Brandschutzelemente sicher an dem Brandschott gehalten sind. In diesem Fall dienen die Schutzschienen 32 und 34 nicht nur zum Schutz gegen eine Beschädigung der Brandschutzpackungen sondern auch zur Montage weiterer Brandschutzelemente, d.h. die Schutzschienen besitzen in Fall eine Doppelfunktion.

## Patentansprüche

1. Brandschott für Rohre und Leitungen, umfassend ein Gehäuse (10) aus Metall mit zumindest zwei offenen Seiten (20, 22) und zumindest drei Seitenwänden (12-18), wobei an den Innenseiten der Seitenwände quaderförmige (12-18) Brandschutzpackungen (24-30) befestigt sind,
**dadurch gekennzeichnet,**
**dass** an mindestens einer Stirnseite von zumindest einer Brandschutzpackung (24, 28) eine Schutzschiene (32, 34) vorhanden ist.

2. Brandschott nach Anspruch 1,
**dadurch gekennzeichnet,**
**dass** sich die Schutzschiene (32, 34) über die gesamte Stirnseite erstreckt.

3. Brandschott nach Anspruch 1 oder 2,
**dadurch gekennzeichnet,**
**dass** die Schutzschiene (32, 34) an zumindest einer Brandschutzpackung (24-30) befestigt, insbesondere verschraubt ist.

4. Brandschott nach Anspruch 3,
**dadurch gekennzeichnet,**
**dass** sich ein Befestigungsmittel (38) der Schutzschiene (32, 34) zwischen zwei offenen Seiten (20, 22) erstreckt.

5. Brandschott nach einem der vorstehenden Ansprüche,
**dadurch gekennzeichnet,**
**dass** die Schutzschiene (32, 34) eine Profilschiene ist.

6. Brandschott nach Anspruch 5,
**dadurch gekennzeichnet,**
**dass** die Profilschiene ein C-Profil hat, dessen Schlitz (33, 35) sich zu einer offenen Seite hin öffnet.

7. Brandschott nach einem der vorstehenden Ansprüche,
**dadurch gekennzeichnet,**
**dass** an der Schutzschiene (32, 34) zumindest eine Halterung (46, 48, 50, 52) für Brandschutzelemente (42, 44) befestigt ist.

8. Brandschott nach Anspruch 6 und 7,
**dadurch gekennzeichnet,**
**dass** die Halterung (48, 50, 52) an der Profilschiene befestigt ist.

9. Brandschott nach einem der vorstehenden Ansprüche,
**dadurch gekennzeichnet,**
**dass** die Halterung Haltewinkel (50, 52) umfasst.

10. Brandschott nach einem der vorstehenden Ansprüche,
**dadurch gekennzeichnet,**
**dass** an der Stirnseite von zwei parallel beabstandeten Brandschutzpackungen (24, 28) jeweils mindestens eine Schutzschiene (32, 34) vorhanden ist.
